# EUROPEAN PATENT APPLICATION

(11) **EP 4 528 773 A1**
(43) Date of publication of application: **26.03.2025**
(21) Application number: 23826077.2
(22) Date of filing: 26.05.2023
(51) Int. Cl.: H01H 50/30

(54) **NOISE REDUCTION GASKET AND RELAY**

(30) Priority: 21.06.2022 CN 202210707285
(71) Applicant: Xiamen Hongfa Electric Power Controls Co., Ltd., Xiamen, Fujian 361027 (CN)
(72) Inventor: DAI, Wenguang, Xiamen, Fujian 361027 (CN); ZHANG, Qingnian, Xiamen, Fujian 361027 (CN); WANG, Meng, Xiamen, Fujian 361027 (CN); LUO, Chengcan, Xiamen, Fujian 361027 (CN); CHEN, Songsheng, Xiamen, Fujian 361027 (CN)
(74) Representative: Hunter, Christopher Jack Owen
(86) International application number: PCT/CN2023/096650
(87) International publication number: WO 2023/246428

(57) **Abstract**

The present invention relates to the technical field of electric power, and provides a noise reduction gasket and a relay. The noise reduction gasket is located between the driving rod assembly (200) and a yoke plate (300). The noise reduction gasket comprises a bearing portion (1), a supporting portion (2) and a flexible deformation portion (3); the bearing portion (1) is provided on the yoke plate (300); the supporting portion (2) is connected to the bearing portion (1); the driving rod assembly (200) is configured to pass through the supporting portion (2) along a first direction and selectively abut against the supporting portion (2); the flexible deformation portion (3) is provided between the bearing portion (1) and the supporting portion (2), and is used for cushioning between the supporting portion (2) and the bearing portion (1) and noise reduction, wherein the noise reduction gasket is at least partially made of a rigid material. The noise reduction gasket is at least partially made of a rigid material, so that the noise reduction gasket has high strength, is not prone to large deformation, has good fatigue resistance, and has a long service life.

## Description

### CROSS REFERENCE

This application is based upon and claims priority to Chinese Patent Application No. 202210707285. 7 and titled "A Noise Reduction Gasket and Relay" filed on June 21, 2022. The entire contents thereof are incorporated herein by reference.

### TECHNICAL FIELD

The present disclosure relates to a noise reduction gasket a and a relay.

### BACKGROUND

A relay is an electronic control device and is commonly applied in automatic control circuit. The relay includes a control system and a controlled system. The control system is used as an input circuit, and the controlled system is used as an output circuit. relay essentially controls a large current by using a small current, performing functions as an "automatic switch".

As a special type of relay, high voltage DC relay is mainly used in electric vehicles to control the charging and discharging of batteries. In actual use, the contacts and iron core of the relay are in a complete closed state before the relay is disconnected, a large spring is compressed to provide a contact pressure, and a small spring is also compressed to provide a contact disconnecting force. At this time, both springs are compressed, storing a potential energy of the springs. If a driving end of a coil of the relay receives a power-off command, the energy stored in the springs will be converted into a kinetic energy of the entire dynamic assembly, thereby realizing the disconnection between contacts of the relay, until a driving rod assembly hits a yoke plate, and the entire movement is terminated. Due to the large energy, the impact force of the driving rod assembly and the yoke plate is very large, resulting in a large noise generated by the relay in this process. However, general cars need to consider the low-noise driving experience of passengers, requiring the sound of the switching action of the relay to be small enough, and the noise is less than 60dB, so as not to bring a noisy experience to users.

Most of the existing relays do not have noise reduction facilities, or only have rubber or other soft pads at the stop of the driving rod assembly to buffer the impact of the driving rod assembly on the yoke plate when it is released, thereby reducing the noise. Since the pads are easily deformed, the noise reduction effect is not obvious, and since the relay is frequently switched on and off, it needs a mechanical life of hundreds of thousands of times, so the pads are prone to fatigue failure and foreign matter.

### SUMMARY

The present disclosure provides a noise reduction gasket and a relay, which can reduce the generation of noise, suppress the spread of noise, and improve the noise reduction effect.

According to one aspect of the present disclosure, a noise reduction gasket located between a driving rod assembly and a yoke plate, including a bearing part mounted on the yoke plate; a supporting part connected to the bearing part, the driving rod assembly being configured to pass through the supporting part along a first direction and selectively abut against the supporting part; and a flexible deformation part provided between the bearing part and the supporting part, and is configured for buffering between the supporting part and the bearing part and for noise reduction, wherein the noise reduction gasket is at least partially made of a rigid material.

In some embodiments, the noise reduction gasket includes a hollow part, the hollow part is disposed between the bearing part and the supporting part along the first direction.

In some embodiments, along the first direction, a bottom surface of the supporting part is higher than a bottom surface of the bearing part, so that the hollow part is formed between the supporting part and the bearing part.

In some embodiments, along a circumferential direction of the first direction, the supporting part, the flexible deformation part and the bearing part are mutually sleeved.

In some embodiments, a projection of the supporting part on the yoke plate is arranged within a projection of the bearing part on the yoke plate; or, the projection of the bearing part on the yoke plate is arranged within the projection of the supporting part on the yoke plate.

In some embodiments, the flexible deformation part includes a connecting portion, the connecting portion is located between the bearing part and the supporting part, and the connecting portion is connected to the bearing part and the supporting part, respectively.

In some embodiments, the connecting portion is at least partially provided with a corrugated structure, the corrugated structure is configured to absorb and block noise transmitted from the supporting part to the bearing part.

In some embodiments, the connecting portion is provided with at least one of a groove and a protrusion to form the corrugated structure.

In some embodiments, along the first direction, a thickness of the connecting portion is at least partially different.

In some embodiments, along the first direction, the thickness of the connecting portion is smaller than a thickness of the supporting part, and the thickness of the connecting portion is smaller than a thickness of the bearing part.

In some embodiments, the flexible deformation part further includes a hollow out portion, the hollow out portion is located between the bearing part and the supporting part, and is configured to block the noise transmitted from the supporting part to the bearing part.

In some embodiments, a plurality of connecting portions spaced with each other are arranged between the bearing part and the supporting part, and the hollow out portion is formed between two adjacent connecting portions.

In some embodiments, a width of the connecting portion along the first direction gradually decreases from the bearing part to the supporting part; or, the width of the connecting portion along the first direction gradually increases from the bearing part to the supporting part.

In some embodiments, the connecting portion is at least partially provided with a corrugated structure, the corrugated structure is configured to absorb and block noise transmitted from the supporting part to the bearing part; wherein the hollow out portion is provided on the connecting portion.

In some embodiments, the corrugated structure and the hollow out portion are arranged around the supporting part along a circumference of the first direction; or, along a direction from the supporting part to the bearing part, the hollow out portion and the corrugated structure are spaced apart.

In some embodiments, the connecting portion is provided with a hole to form the hollow out portion.

In some embodiments, the noise reduction gasket is provided with a notch along a radial direction of the driving rod assembly.

In some embodiments, a cross-section of the notch is C-shaped, U-shaped or V-shaped.

In some embodiments, any one of the supporting part and the bearing part is provided with a through hole, the through hole is configured for the driving rod assembly to pass through, wherein the notch is communicated with the through hole.

In some embodiments, a cross-section of the supporting part is circular, square or polygonal; and/or, a cross-section of the bearing part is circular, square or polygonal.

According to another aspect of the present disclosure, a relay, including a static contact terminal, a movable contact piece, a driving rod assembly, a yoke plate and a noise reduction gasket of present disclosure, the noise reduction gasket is disposed between the driving rod assembly and the yoke plate, the driving rod assembly is disposed through the yoke plate and is configured to drive the movable contact piece to move toward or away from the static contact terminal, so that the movable contact piece selectively contacts with or separates from the static contact terminal.

In some embodiments, the bearing part of the noise reduction gasket is fixedly arranged relative to the yoke plate; or, the supporting part of the noise reduction gasket is fixedly arranged relative to the driving rod assembly; or, the noise reduction gasket is movably arranged between the bearing part and the yoke plate, and the noise reduction gasket is movably arranged between the supporting part and the driving rod assembly.

In some embodiments, one of the bearing part of the noise reduction gasket and the yoke plate is provided with a positioning column, another one of the bearing part of the noise reduction gasket and the yoke plate is provided with a positioning hole corresponding to the positioning column, and the positioning column passes through the positioning hole.

An embodiment of the present disclosure has the following advantages or beneficial effects:

In the embodiment of the present disclosure, the noise reduction gasket is at least partially made of rigid material, so that the noise reduction gasket has relatively high strength and is not prone to large deformation. It has good fatigue resistance and is not prone to foreign matter, and has a long service life. The bearing part is arranged on the yoke plate, and the bearing part is equivalent to a lower supporting surface, plays the role of overall support, and provides a supporting position for the noise reduction gasket to be placed on the yoke plate. The driving rod assembly is configured to pass through the supporting part along a first direction, and the supporting part provides an avoidance space for the movement of the driving rod assembly. The driving rod assembly selectively abuts against the supporting part. The supporting part is equivalent to an upper supporting surface, providing a force supporting position for the driving rod assembly.

The flexible deformation part is arranged between the bearing part and the supporting part, and the flexible deformation part serves to connect the bearing part and the supporting part. When the driving rod assembly impacts the supporting part, the flexible deformation part can generate flexible deformation, which buffers the impact of the driving rod assembly. Under the flexible deformation of the flexible deformation part, the noise transmitted from the supporting part to the bearing part can be silenced to a certain extent, thereby ensuring a good noise reduction effect. At the same time, the flexible deformation of the flexible deformation part is equivalent to extending a noise spread path, thereby increasing an energy loss and reducing the noise transmitted to the yoke plate.

The relay provided in the embodiment of the present disclosure, the driving rod assembly is passed through the yoke plate and is configured to drive the movable contact piece to move toward or away from the static contact terminal, so that the movable contact piece can selectively contact with or separate from the static contact terminal. When the movable contact piece contacts with the static contact at the bottom of the static contact terminal, current flows into the static contact terminal and flows out of the static contact terminal after passing through the movable contact piece, thereby connecting the load.

The noise reduction gasket is arranged between the driving rod assembly and the yoke plate. The noise reduction gasket isolates the driving rod assembly and the yoke plate. The driving rod assembly does not directly contact with the yoke plate, but directly contacts with the noise reduction gasket. The noise reduction gasket plays a role in buffering and noise reduction, achieving the effect of reducing the generation of noise and suppressing the spread of noise.

### BRIEF DESCRIPTION OF THE DRAWINGS

The above and other features and advantages of the present disclosure will become more apparent by describing in detail exemplary embodiments thereof with reference to the accompanying drawings.
Fig. 1 is a first schematic diagram of the noise reduction gasket between the driving rod assembly and the yoke plate according to an exemplary embodiment.
Fig. 2 is a second schematic diagram of the noise reduction gasket between the driving rod assembly and the yoke plate according to an exemplary embodiment.
Fig. 3 is a first structural diagram of the noise reduction gasket according to the first exemplary embodiment.
Fig. 4 is a second structural diagram of the noise reduction gasket according to the first exemplary embodiment.
Fig. 5 is a third structural diagram of the noise reduction gasket according to the first exemplary embodiment.
Fig. 6 is a first structural diagram of the noise reduction gasket according to the second exemplary embodiment.
Fig. 7 is a second structural diagram of the noise reduction gasket according to the second exemplary embodiment.
Fig. 8 is a third structural diagram of the noise reduction gasket according to the second exemplary embodiment.
Fig. 9 is a first structural diagram of the noise reduction gasket according to the third exemplary embodiment.
Fig. 10 is a second structural diagram of the noise reduction gasket according to the third exemplary embodiment.
Fig. 11 is a third structural diagram of the noise reduction gasket according to the third exemplary embodiment.
Fig. 12 is a first structural diagram of the noise reduction gasket according to the fourth exemplary embodiment.
Fig. 13 is a second structural diagram of the noise reduction gasket according to the fourth exemplary embodiment.
Fig. 14 is a third structural diagram of the noise reduction gasket according to the fourth exemplary embodiment.
Fig. 15 is a first structural diagram of the noise reduction gasket according to the fifth exemplary embodiment.
Fig. 16 is a second structural diagram of the noise reduction gasket according to the fifth exemplary embodiment.
Fig. 17 is a third structural diagram of the noise reduction gasket according to the fifth exemplary embodiment.
Fig. 18 is a first structural diagram of the noise reduction gasket according to the sixth example embodiment.
Fig. 19 is a second structural diagram of the noise reduction gasket according to the sixth example embodiment.
Fig. 20 is a third structural diagram of the noise reduction gasket according to the sixth exemplary embodiment.
Fig. 21 is a first structural diagram of the noise reduction gasket according to the seventh exemplary embodiment.
Fig. 22 is a second structural diagram of the noise reduction gasket according to the seventh exemplary embodiment.
Fig. 23 is a third structural diagram of the noise reduction gasket according to the seventh exemplary embodiment.
Fig. 24 is a first structural diagram of the noise reduction gasket according to the eighth example embodiment.
Fig. 25 is a second structural diagram of the noise reduction gasket according to the eighth example embodiment.
Fig. 26 is a third structural diagram of the noise reduction gasket according to the eighth example embodiment.
Fig. 27 is a first structural diagram of the noise reduction gasket according to the ninth example embodiment.
Fig. 28 is a second structural diagram of the noise reduction gasket according to the ninth example embodiment.
Fig. 29 is a third structural diagram of the noise reduction gasket according to the ninth example embodiment.
Fig. 30 is a first structural diagram of the noise reduction gasket according to the tenth example embodiment.
Fig. 31 is a second structural diagram of the noise reduction gasket according to the tenth example embodiment.
Fig. 32 is a third structural diagram of the noise reduction gasket according to the tenth example embodiment.
Fig. 33 is an explosion diagram of the relay according to the eleventh example embodiment.
Fig. 34 is a sectional view of the relay according to the eleventh example embodiment.
Fig. 35 is an explosion diagram of the relay according to the twelfth example embodiment.
Fig. 36 is a sectional view of the relay according to the twelfth example embodiment.
Fig. 37 is a first assembly diagram of the noise reduction gasket and the yoke plate in the relay according to the twelfth example embodiment.
Fig. 38 is a second assembly diagram of the noise reduction gasket and the yoke plate in the relay according to the twelfth example embodiment.
Fig. 39 is a third assembly diagram of the noise reduction gasket and the yoke plate in the relay according to the twelfth example embodiment.
Fig. 40 is a first assembly diagram of the noise reduction gasket and the yoke plate in the relay according to the thirteenth example embodiment.
Fig. 41 is a second assembly diagram of the noise reduction gasket and the yoke plate in the relay according to the thirteenth example embodiment.
Fig. 42 is a third assembly diagram of the noise reduction gasket and the yoke plate in the relay according to the thirteenth example embodiment.
   wherein Reference numerals are explained as follows:
   100, noise reduction gasket. 101, positioning hole. 200, driving rod assembly. 201, push rod. 202, first elastic piece. 203, connecting bracket. 204, mounting seat. 300, yoke plate. 301, positioning column. 302, accommodation groove. 400, static contact terminal. 500, movable contact piece. 600, electromagnet unit. 1, bearing part. 2, supporting part. 3, flexible deformation part. 4, hollow part. 5, notch. 21, through hole. 31, connecting portion. 32, corrugated structure. 33, hollow out portion.

### DETAILED DESCRIPTION

Example embodiments will now be described more fully with reference to the accompanying drawings. However, example embodiments can be implemented in many forms and should not be construed as limited to the embodiments arranged forth herein. Although relative terms such as "upper" and "lower" are used in this specification to describe the relative relationship of one component of the illustration to another component, these terms are used in this specification only for convenience, such as according to the orientation of the examples in the drawings. It is understood that if the device of the illustration is turned over to make it upside down, the component described as "upper" will become the component "lower". Other relative terms such as "top", "bottom" and the like are also used to have similar meanings. When a structure is "on" another structure, it may mean that the structure is integrally formed on the other structure, or that the structure is "directly" disposed on the other structure, or that the structure is "indirectly" disposed on the other structure through another structure.

The terms "a", "an", "the" and "" are used to indicate the presence of one or more elements/components/etc. The terms "including" and "having" are used to indicate an open-ended inclusive sense and mean that there may be additional elements/components/etc. in addition to the listed elements/components/etc. The terms "first", "second", etc. are used merely as labels and do not limit the quantity of their objects.

Existing cars need to consider the low-noise experience of passengers, requiring the sound of the switch action of the relay to be small enough to avoid giving users a noisy experience. When the contacts of the relay are separated, the driving rod assembly will directly contact with the yoke plate and produce a large impact force, causing the relay to generate a lot of noise in this process.

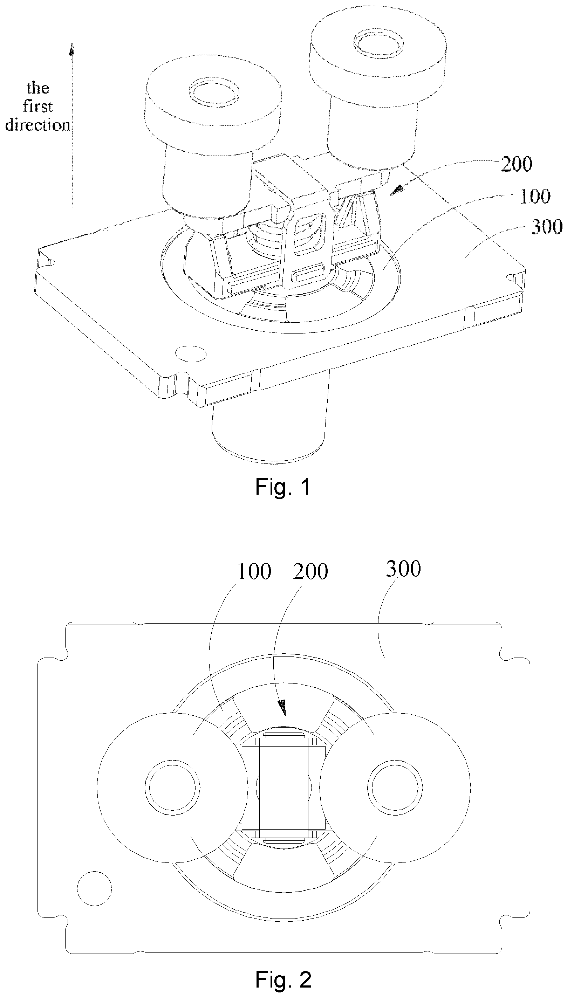

In order to solve this problem, as shown in Figs. 1-2, the present embodiment provides a noise reduction gasket 100, which is located between the driving rod assembly 200 and the yoke plate 300. By arranging the noise reduction gasket 100 between the driving rod assembly 200 and the yoke plate 300, the noise reduction gasket 100 plays a role in isolating the driving rod assembly 200 and the yoke plate 300, avoiding direct contact between the driving rod assembly 200 and the yoke plate 300, and playing a role in buffering the impact of the driving rod assembly 200.

If the noise reduction gasket 100 is made of a soft material such as rubber, noise reduction and buffering can be achieved by using its own deformation. However, since the relay needs to be frequently switched on and off, the soft material such as rubber has a relatively large fatigue resistance and is prone to failure, and foreign matter such as debris is generated, thereby affecting the performance.

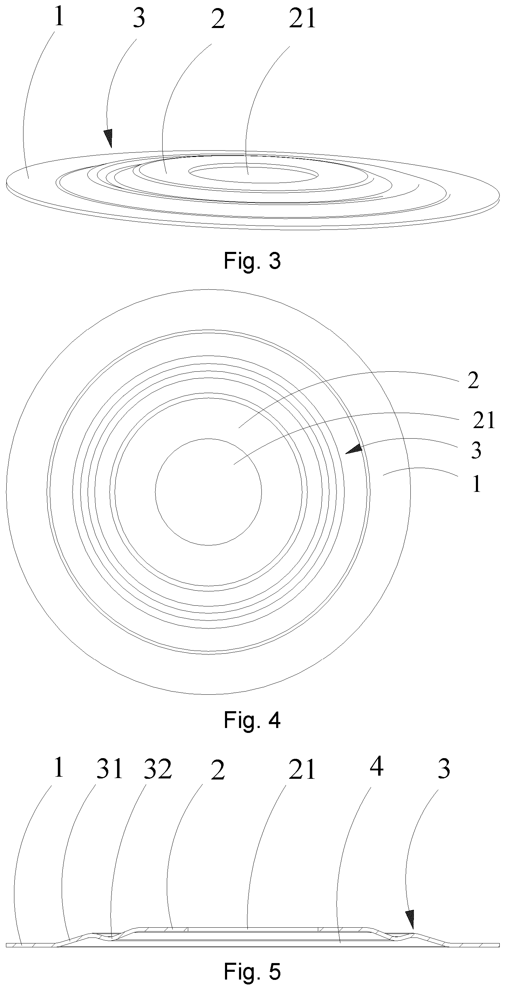

In order to solve this problem, as shown in Figs. 3 to 5, the noise reduction gasket 100 provided in the embodiment of the present disclosure includes a bearing part 1, a supporting part 2 and a flexible deformation part 3. The bearing part 1 is arranged on the yoke plate 300, and connected to the bearing part 1. The supporting part 2 is located above the bearing part 1 along a first direction. The driving rod assembly 200 is configured to pass through the supporting part 2 along the first direction and selectively abut against the supporting part 2. The flexible deformation part 3 is arranged between the bearing part 1 and the supporting part 2, and is used for buffering between the supporting part 2 and the bearing part 1 and for noise reduction. Wherein the noise reduction gasket 100 is at least partially made of rigid material.

The noise reduction gasket 100 provided in this embodiment is at least partially made of rigid material, so that the noise reduction gasket 100 has a relatively high strength and is not easy to generate a large deformation, the noise reduction gasket 100 has good fatigue resistance, and is not easy to produce foreign matter, and has a long service life. The bearing part 1 is arranged on the yoke plate 300, and the bearing part 1 is equivalent to the lower supporting surface, plays a role of overall support, and provides a supporting position for the noise reduction gasket 100 to be placed on the yoke plate 300. The driving rod assembly 200 is passed through the supporting part 2 along the first direction, and the supporting part 2 provides an avoidance space for the movement of the driving rod assembly 200. The driving rod assembly 200 selectively abuts against the supporting part 2, and the supporting part 2 is equivalent to an upper supporting surface, providing a force support position for the driving rod assembly 200.

When the driving rod assembly 200 is released, it directly hits the yoke plate 300, the driving rod assembly 200 hits the supporting part 2, and the bearing part 1 contacts the yoke plate 300, so that the impact point is transferred. The flexible deformation part 3 is arranged between the bearing part 1 and the supporting part 2, and the flexible deformation part 3 plays a role of intermediate connection between the bearing part 1 and the supporting part 2. When the driving rod assembly 200 hits the supporting part 2, the flexible deformation part 3 can generate flexible deformation, which plays a buffering role on the impact of the driving rod assembly 200. For the noise transmitted from the supporting part 2 to the bearing part 1, under the flexible deformation of the flexible deformation part 3, a certain degree of silencing effect is achieved, ensuring a good noise reduction effect. At the same time, the flexible deformation of the flexible deformation part 3t is equivalent to increasing the noise spread path, which is used to increase the energy loss and reduce the noise transmitted to the yoke plate 300.

It can be understood that the rigid material specifically refers to elastic fatigue-resistant materials such as stainless steel and beryllium copper, and specifically can be metals such as aluminum, copper, carbon fiber, or hard plastic, etc. This embodiment does not specifically limit the type of rigid material, and can be adjusted according to actual production needs. As long as the material is not a rubber pad with large deformation and has greater structural strength and rigidity, it is within the protection scope of this embodiment.

It should be noted in particular that since the noise reduction gasket 100 is at least partially made of a rigid material, on the basis that the noise reduction gasket 100 is rigid, cushioning and noise reduction are achieved by setting the flexible deformation part 3. In other words, the flexible deformation part 3 works on the premise that the basis itself is rigid, and then it has the effect of flexible noise elimination and cushioning.

It can be understood that the first direction specifically refers to the moving direction of the driving rod assembly 200, which can be specifically a vertical direction.

In one embodiment, any one of the supporting part 2 and the bearing part 1 is provided with a through hole 21, and the through hole 21 is used for the driving rod assembly 200 to pass through. The through hole 21 provides an avoidance space for the driving rod assembly 200 to move along the first direction, so that the driving rod assembly 200 can move freely, and the flexibility of the relay on and off is ensured. Wherein the through hole 21 can specifically be a closed hole structure such as a round hole, so as to avoid the driving rod assembly 200 from being separated from the through hole 21.

In an embodiment, as shown in Figs. 3-5, the noise reduction gasket 100 further includes a hollow part 4, a long first direction, the hollow part 4 is disposed between the bearing part 1a and the supporting part 2.

By arranging the hollow part 4 between the bearing part 1 and the supporting part 2, that is, the supporting part 2 has a certain suspension space relative to the bearing part 1, when the driving rod assembly 200 impacts the supporting part 2, the supporting part 2 will slightly move downward along the first direction to a certain extent after being impacted, and the hollow part 4 provides a moving space for the supporting part 2 to move, thereby achieving a buffering effect on the impact of the driving rod assembly 200.

It can be understood that the hollow part 4 remains suspended after the release action of the relay is completed and the impact buffer is applied, that is, the hollow part 4 actually activates the buffering function and does not directly transmit the impact to the yoke plate 300.

Specifically, along the first direction, the bottom surface of the supporting part 2 is higher than the bottom surface of the bearing part 1, so that the hollow part 4 is formed between the supporting part 2 and the bearing part 1.

It can be understood that if the height difference between the top surface of the supporting part 2 and the yoke plate 300 is exactly equal to the thickness of the blank material of the noise reduction gasket 100, wherein the blank material thickness specifically refers to the thickness of the rigid material, when the driving rod assembly 200 generates an impact force on the supporting part 2, since the supporting part 2 is stacked on the bearing part 1, the supporting part 2 and the bearing part 1 are in contact with each other, and the impact force is transmitted to the yoke plate 300 through the supporting part 2 and the bearing part 1, the noise reduction and buffering effects are relatively poor.

The bottom surface of the supporting part 2 is higher than the bottom surface of the bearing part 1, that is, the supporting part 2 is not simply stacked on the bearing part 1, and the bearing part 1 and the supporting part 2 are not in the same plane. In other words, along the first direction, the height of the top surface of the supporting part 2 relative to the yoke plate 300 is greater than the thickness of the blank material of the noise reduction gasket 100. At this time, when the driving rod assembly 200 generates an impact force on the supporting part 2, since the supporting part 2 is suspended relative to the bearing part 1, the supporting part 2 and the bearing part 1 do not directly contact with each other over a large area. After the impact force hits the supporting part 2, the hollow part 4 is used to achieve buffering, and it is not transmitted to the yoke plate 300 through the bearing part 1 over a large area, thereby improving the noise reduction and buffering effects.

It can be understood that the bottom surface of the supporting part 2 may be higher than the top surface of the bearing part 1, or lower than the top surface of the bearing part 1, as long as the bottom surface of the supporting part 2 can be suspended in the air. However, when the bottom surface of the supporting part 2 is flush with the top surface of the bearing part 1, the bottom surface of the supporting part 2 and the bearing part 1 cannot be in direct contact, and the two need to be staggered by a certain distance to provide the required accommodation space for the flexible deformation part 3.

In one embodiment, as shown in Figs. 3-5, the projection of the bearing part 1 on the yoke plate 300 and the projection of the supporting part 2 on the yoke plate 300 do not overlap.

The projection of the bearing part 1 on the yoke plate 300 and the projection of the supporting part 2 on the yoke plate 300 do not overlap, and the supporting part 2 and the bearing part 1 are non-overlapping structures, that is, the outer shapes of the supporting part 2 and the bearing part 1 do not enclose a cylindrical structure, but the bearing part 1 and the supporting part 2 are staggered with each other, so as to provide an accommodation space for the flexible deformation part 3 between the bearing part 1 and the supporting part 2.

In one embodiment, along the circumferential direction of the first direction, the supporting part 2, the flexible deformation part 3 and the bearing part 1 are mutually sleeved.

In other words, the supporting part 2, the bearing part 1 and the flexible deformation part 3 are all similar in appearance to a ring structure. The supporting part 2, the bearing part 1 and the flexible deformation part 3 are all arranged around the driving rod assembly 200. The impact force generated by the driving rod assembly 200 impacting the supporting part 2 will be evenly dispersed around the supporting part 2, and then evenly dispersed around the bearing part 1 through the flexible deformation part 3, so as to ensure uniform dispersion of noise transmission.

In one embodiment, as shown in Figs. 3 to 5, the flexible deformation part 3 includes a connecting portion 31. The connecting portion 31 is located between the bearing part 1 and the supporting part 2, and the connecting portion 31 is respectively connected to the bearing part 1 and the supporting part 2.

By providing the connecting portion 31 between the bearing part 1 and the supporting part 2, the connecting portion 31 serves as an intermediate connection between the bearing part 1 and the supporting part 2, so that the entire noise reduction gasket 100 is an integral structure, avoiding the situation that the bearing part 1 and the supporting part 2 are split structures and need to be positioned and installed separately. At the same time, since the existing driving rod assembly 200 directly hits the yoke plate 300 when partially released, the connecting portion 31 is used as a transition zone between the bearing part 1 and the supporting part 2, avoiding the noise from the supporting part 2 from being directly transmitted to the bearing part 1 and then to the yoke plate 300, which is equivalent to increasing the path for noise transmission, thereby reducing the noise transmission.

In one embodiment, as shown in Figs. 3-5, the connecting portion 31 is at least partially provided with a corrugated structure 32, and the corrugated structure 32 is used to absorb and block the noise transmitted from the supporting part 2 to the bearing part 1, and to buffer the impact of the driving rod assembly 200.

The connecting portion 31 is at least partially provided with the corrugated structure 32, so that the surface of the connecting portion 31 forms a structure similar to wrinkles, and when the driving rod assembly 200 impacts the supporting part 2 to generate impact force, part of the kinetic energy generated by the impact force is converted into the oscillation energy of the corrugated structure 32, reducing the direct conversion of this part of energy into noise, thereby achieving the function of reducing noise generation. At the same time, the sound is filtered by the corrugated structure 32 before being transmitted to the yoke plate 300 through the bearing part 1, and the energy is further reduced, thereby slowing down the spread of noise.

Specifically, the connecting portion 31 is provided with at least one of a groove and a protrusion to form the corrugated structure 32.

By providing the groove or protrusion on the surface of the connecting portion 31, the groove wall of the groove or the side wall of the protrusion is equivalent to increasing the path for noise spread, and the connection between two adjacent groove walls in the groove or the connection between two adjacent side walls in the protrusion plays a role in blocking noise and noise filtering. It can be understood that the groove and the protrusion can be provided on the connecting portion 31 at the same time, and the number of the protrusion or the groove is not limited to one, so that the surface of the connecting portion 31 forms a wavy or sawtooth or square wave structure, which plays an effect of improving noise release and spread.

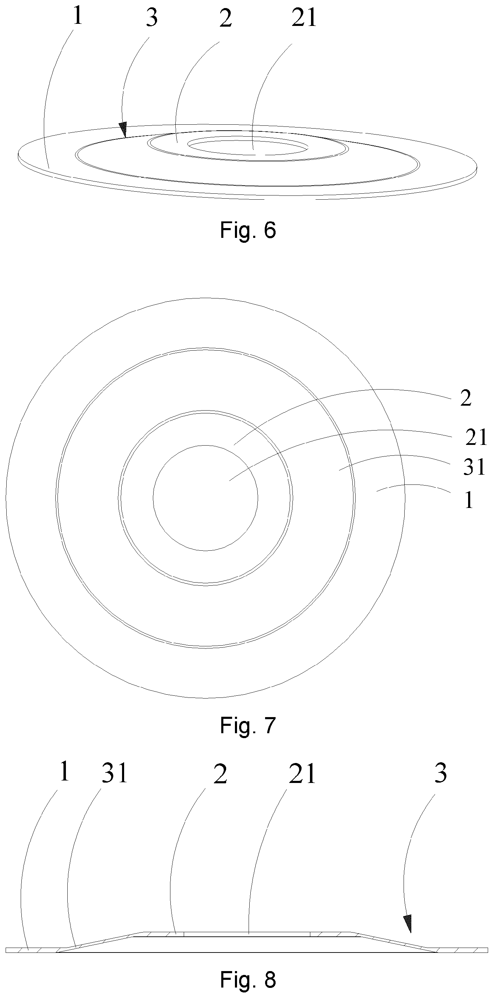

In one embodiment, as shown in Fig. 6 to Fig. 8, along the first direction, the thickness of the connecting portion 31 is smaller than the thickness of the supporting part 2, and the thickness of the connecting portion 31 is smaller than the thickness of the bearing part 1.

In other words, the thicknesses of the connecting portion 31, the supporting part 2 and the bearing part 1 are not completely the same. Relative to the supporting part 2 and the bearing part 1, the connecting portion 31 has a local thinning effect, which is equivalent to the noise reduction gasket 100 being a "dumbbell-shaped" structure with thick ends and thin middle, thereby improving the flexible deformation effect of the flexible connection part and further reducing sound spread. It can be understood that the thickness of the local area of the connecting portion 31 is thinned, which is used to absorb and cut off the noise transmitted from the supporting part 2 to the bearing part 1 and to buffer the impact on the driving rod assembly 200.

In one embodiment, the thickness of the connecting portion 31 along the first direction gradually decreases from the bearing part 1 to the supporting part 2. Alternatively, the thickness of the connecting portion 31 along the first direction gradually increases from the bearing part 1 to the supporting part 2.

In other words, the connecting portion 31 itself is not a uniform cross-sectional structure, and the thickness of the connecting portion 31 itself is also variable, so that the deformation of the connecting portion 31 is increased, and the flexible deformation effect of the flexible connecting portion is further improved to achieve the purpose of reducing sound spread.

It can be understood that in some other embodiments, the thickness of the connecting portion 31 along the first direction from the bearing part 1 to the supporting part 2 may also remain unchanged.

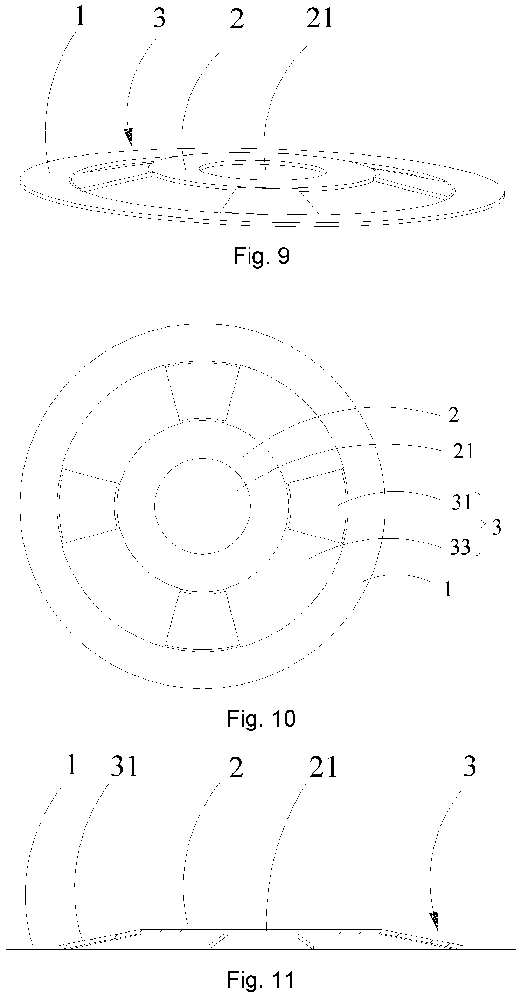

In one embodiment, as shown in Figs. 9 to 11, the flexible deformation part 3 further includes a hollow out portion 33, the hollow out portion 33 is located between the bearing part 1 and the supporting part 2, for blocking the noise transmitted from the supporting part 2 to the bearing part 1, and for buffering the impact on the driving rod assembly 200.

By providing the hollow out portion 33 between the bearing part 1 and the supporting part 2, the hollow out portion 33 serves to isolate the supporting part 2 from the bearing part 1. Under the action of the hollow out portion 33, noise cannot be transmitted from the supporting part 2 to the bearing part 1 through the hollow out portion 33, thereby achieving a noise blocking effect and suppressing the spread of sound, thereby reducing the noise transmitted from the supporting part 2 to the bearing part 1.

In one embodiment, as shown in Figs. 9 to 11, a plurality of connecting portions 31 are spaced apart between the bearing part 1 and the supporting part 2, and one hollow out portion 33 is formed between two adjacent connecting portions 31.

In other words, the connecting portion 31 can be an integral structure (as shown in Fig. 6-Fig. 8), the connecting portion 31 of the integral structure is specifically a ring structure, the connecting portion 31 can also be a split structure (as shown in Fig. 9-Fig. 11), the number of the connecting portion 31 of the split structure is multiple, and the multiple connecting portions 31 are arranged around the supporting part 2and spaced with each other, that is, there is a certain space between two adjacent connecting portions 31, and the space is the hollow out portion 33. It can be understood that the noise generated by the driving rod assembly 200 impacting the supporting part 2 is divided into two parts, one part of which is transmitted to the bearing part 1 through the connecting portion 31, and the connecting portion 31 plays a role in extending the noise spread path while serving as the intermediate connection between the supporting part 2 and the bearing part 1, and the other part blocks the spread path through the hollow out portion 33, which plays a role in suppressing the spread of noise. Under the joint action of these two parts, the purpose of reducing noise is achieved.

In one embodiment, as shown in Figs. 9 to 11, the width of the connecting portion 31 along the first direction gradually decreases from the bearing part 1 to the supporting part 2. Alternatively, the width of the connecting portion 31 along the first direction gradually increases from the bearing part 1 to the supporting part 2.

As to the connecting portion 31 of the split structure, the width of the connecting portion 31 may not be an equal-width structure, so that the deformation of the connecting portion 31 at different radial positions relative to the driving rod assembly 200 is different, which is beneficial to reducing stress concentration and improving the fatigue life of the noise reduction gasket 100. At the same time, the deformation of the flexible deformation part 3 is further improved. After the supporting part 2 is impacted by the driving rod assembly 200, the flexible deformation part 3 has a larger deformation, which improves the buffering and noise reduction effects.

In some other embodiments, the width of the connecting portion 31 along the circumferential direction of the first direction may also remain unchanged from the bearing part 1 to the supporting part 2.

It should be noted in particular that the flexible deformation part 3 is relatively flexible, and the connecting portion 31 of the flexible deformation part 3 specifically adopts hollowing, wave and thinning to realize the function of flexible deformation, which are all used to achieve the purpose of reducing sound spread. It can be understood that the connecting portion 31 of the flexible deformation part 3 can also adopt at least two of these three methods to combine or superimpose, so as to further reduce the noise spread.

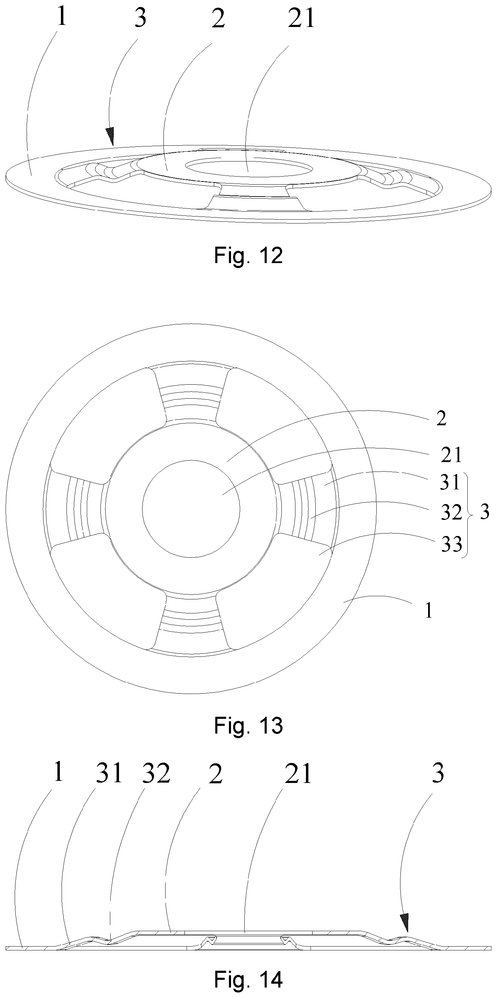

Specifically, as shown in Figs. 12 to 14, the connecting portion 31 is at least partially provided with the corrugated structure 32, the corrugated structure 32 is used to absorb and block the noise transmitted from the supporting part 2 to the bearing part 1, and the connecting portion 31 is provided with the hollow out portion 33.

In other words, the connecting portion 31 has both the corrugated structure 32 and the hollow out portion 33, which is equivalent to the composite of the two modes of hollowing and wavy of the flexible deformation part 3. The noise generated by the driving rod assembly 200 impacting the supporting part 2 is divided into two parts, one of which is transmitted to the bearing part 1 through the corrugated structure 32 of the connecting portion 31, converting part of the kinetic energy into the oscillation energy of the corrugated structure 32, reducing the direct conversion of this part of energy into noise, and the other part of the noise is blocked by the hollow out portion 33 due to the spread path, which plays a role in suppressing the spread of noise. Under the joint action of these two parts, the purpose of reducing noise is achieved.

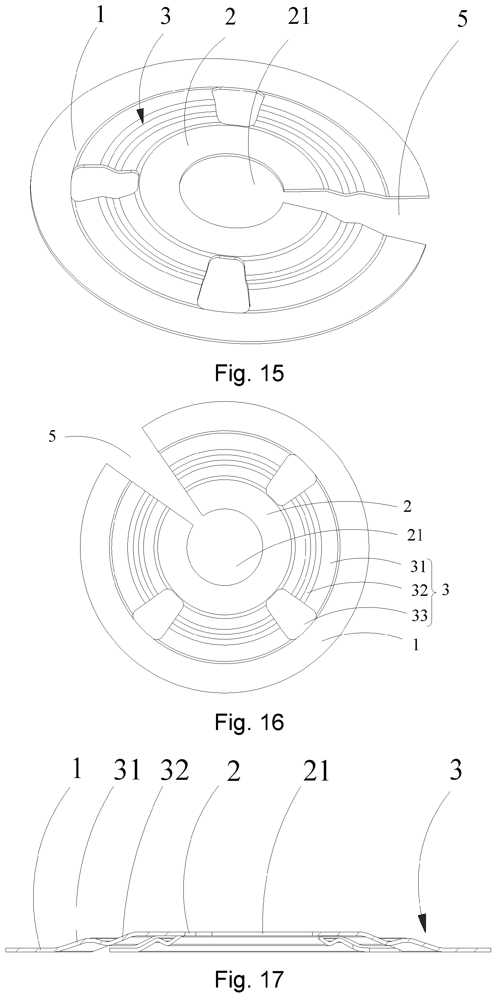

It should be noted in particular that the central angle of the corrugated structure 32 relative to the driving rod assembly 200 can be smaller than the central angle of the hollow out portion 33 relative to the driving rod assembly 200 (as shown in Figs. 12-14), so that the coverage area of the corrugated structure 32 is smaller than the coverage area of the hollow out portion 33. In this case, the hollow out portion 33 plays a major role and the corrugated structure 32 plays an auxiliary role. The central angle of the corrugated structure 32 relative to the driving rod assembly 200 can be larger than the central angle of the hollow out portion 33 relative to the driving rod assembly 200 (as shown in Figs. 15-17), so that the coverage area of the corrugated structure 32 is larger than the coverage area of the hollow out portion 33. In this case, the corrugated structure 32 plays a major role and the hollow out portion 33 plays an auxiliary role.

In one embodiment, as shown in Figs. 15 to 17, the connecting portion 31 is provided with holes to form the hollow out portions 33.

If the connecting portion 31 is provided with the hole, the position of the hole is equivalent to hollowing out the connecting portion 31 to reduce the overall structural strength of the connecting portion 31, so that the connecting portion 31 can be deformed.

It can be understood that the number of the hole can be one or more, and the multiple holes can be radially arranged around the driving rod assembly 200. The hole can be a long hole structure. In this case, along the radial direction of the driving rod assembly 200, the length of the hole is less than or equal to the distance between the supporting part 2 and the bearing part 1.

In one embodiment, along the circumference of the first direction, the corrugated structure 32 and the hollow out portion 33 are arranged around the supporting part 2.

When the corrugated structure 32 and the hollow out portion 33 are arranged around the supporting part 2, the noise generated by the driving rod assembly 200 impacting the supporting part 2 is divided into two parts, one of which is transmitted to the bearing part 1 through the corrugated structure 32 of the connecting portion 31, and the other part of the noise is blocked by the hollow out portion 33. Since the radial distances of the corrugated structure 32 and the hollow out portion 33 relative to the driving rod assembly 200 are approximately the same, there is no order between the corrugated structure 32 and the hollow structure, and both play a role in reducing noise transmission. Under the joint action of these two parts, the purpose of reducing noise is achieved.

In one embodiment, as shown in Figs. 15 to 17, the noise reduction gasket 100 is provided with a notch 5 along the radial direction of the driving rod assembly 200.

Since the noise reduction gasket 100 is provided with the notch 5, the noise reduction gasket 100 is not limited to the peripheral wall closed structure, and the notch 5 also plays a hollowing effect to a certain extent. The noise is blocked by the notch 5. The spread path of the noise is blocked, which plays a role in suppressing the spread of the noise. At the same time, the parts of the noise reduction gasket 100 located on both sides of the notch 5 can be close to or away from each other. The notch 5 provides a moving space for the two parts to move relative to each other, which further plays a role in increasing the overall deformation of the noise reduction gasket 100.

In one embodiment, the shape of the notch 5 is not limited. For example, the cross-section of the notch 5 is any one of C-shaped, U-shaped and V-shaped. In other words, the projection of the notch 5 on the plane where the bearing part 1 is located is C-shaped, U-shaped or V-shaped. The notch 5 is an open structure, which is equivalent to open an opening at the edge of the noise reduction gasket 100. The opening runs through the bearing part 1, the supporting part 2 and the flexible deformation part 3, thus the processing is simple, and the deformation amount is relatively large.

In one embodiment, as shown in Figs. 15-17, the notch 5 is communicated with the through hole 21.

The notch 5 is communicated with the through hole 21, so that the through hole 21 is not limited to a closed hole structure. Under the communicating effect of the notch 5, the through hole 21 can also be an open structure. When the driving rod assembly 200 and the noise reduction gasket 100 are installed, the driving rod assembly 200 can enter the through hole 21 through the open end of the notch 5, or the parts of the noise reduction gasket 100 located on both sides of the notch 5 can be broken apart to facilitate the driving rod assembly 200 to be inserted into the through hole 21. At the same time, the notch 5 is communicated with the through hole 21, further improving the overall deformation of the noise reduction gasket 100.

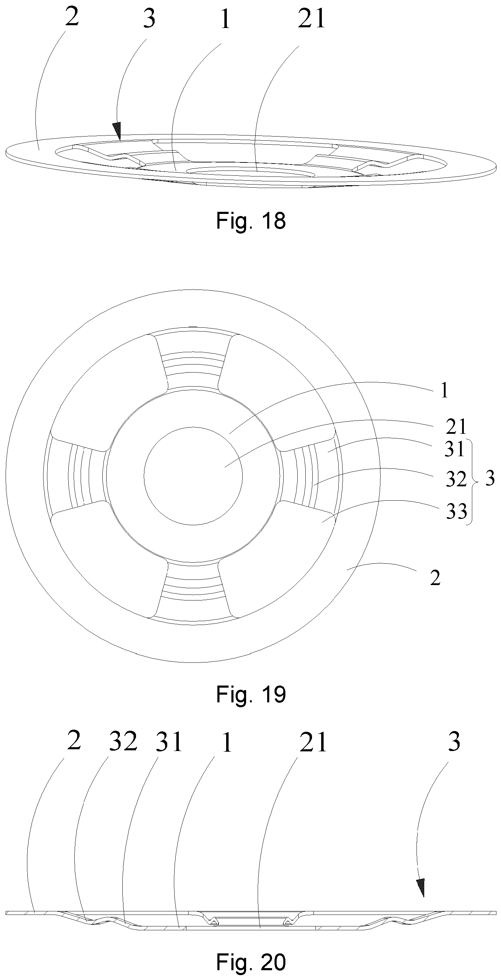

In an embodiment, the projection of the supporting part 2 on the yoke plate 300 and the projection of the flexible deformation part 3 on the yoke plate 300 are arranged within the projection of the bearing part 1 on the yoke plate 300 (as shown in Figs. 15 to 17). Or, the projection of the bearing part 1 on the yoke plate 300 and the projection of the flexible deformation part 3 on the yoke plate 300 are arranged within the projection of the supporting part 2 on the yoke plate 300 (as shown in Figs. 18 to 20).

As shown in Figs. 15 to 17, if the projection of the supporting part 2 on the yoke plate 300 and the projection of the flexible deformation part 3 on the yoke plate 300 are arranged within the projection of the bearing part 1 on the yoke plate 300, that is, the entire noise reduction gasket 100 forms a trumpet-shaped structure with small top and large bottom, and the internal cavity of the trumpet-shaped structure forms at least part of the hollow part 4. The trumpet-shaped structure has a small mouth end and a large mouth end, and the large mouth end of the trumpet-shaped structure is arranged toward the yoke plate 300, and the large mouth end of the trumpet-shaped structure is the open end. At this time, the supporting part 2 is protruding relative to the bearing part 1. Since the diameter size of the bearing part 1 or the distance between the edge of the bearing part 1 and the driving rod assembly 200 is relatively large, while ensuring a good bearing effect, it is equivalent to expanding the impact force received by the supporting part 2 to a larger range, which has a dispersion effect, so as to achieve the purpose of noise reduction.

As shown in Figs. 18 to 20, if the projection of the bearing part 1 on the yoke plate 300 and the projection of the flexible deformation part 3 on the yoke plate 300 are arranged within the projection of the supporting part 2 on the yoke plate 300, that is, the entire noise reduction gasket 100 forms a trumpet-shaped structure with large upper part and small lower part, and the internal cavity of the trumpet-shaped structure forms at least part of the hollow part 4. The trumpet-shaped structure has a small mouth end and a large mouth end, the small mouth end of the trumpet-shaped structure is arranged toward the yoke plate 300, and the large mouth end of the trumpet-shaped structure is an open end. At this time, the bearing part 1 is recessed relative to the supporting part 2. Since the diameter size of the supporting part 2 or the distance between the edge of the supporting part 2 and the driving rod assembly 200 is relatively large, the supporting part 2 can bear the impact force of the driving rod assembly 200 in a larger range, which is equivalent to expanding the impact force received by the supporting part 2 to a larger range, thereby achieving a dispersion effect. In order to achieve the purpose of noise reduction. At the same time, since the diameter size of the bearing part 1 or the distance between the edge of the bearing part 1 and the driving rod assembly 200 is relatively small, that is, the contact area between the bearing part 1 and the yoke plate 300 is relatively small, resulting in that the noise transmitted to the yoke plate 300 is also relatively small.

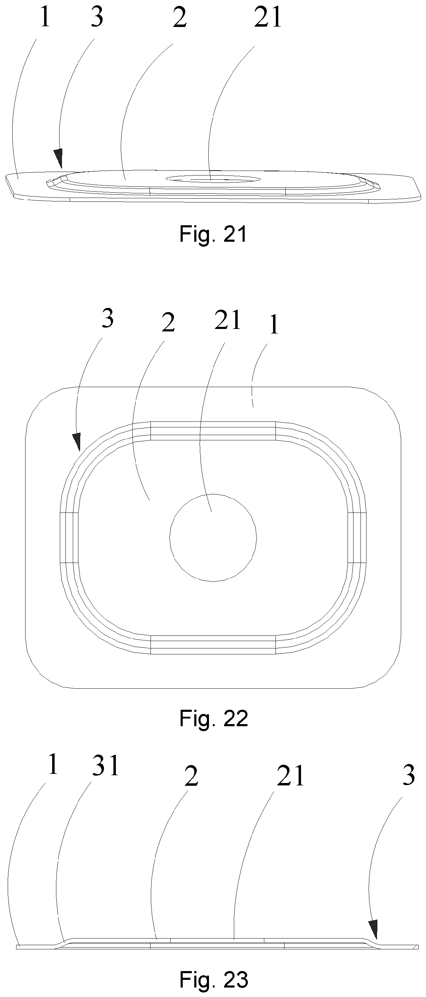

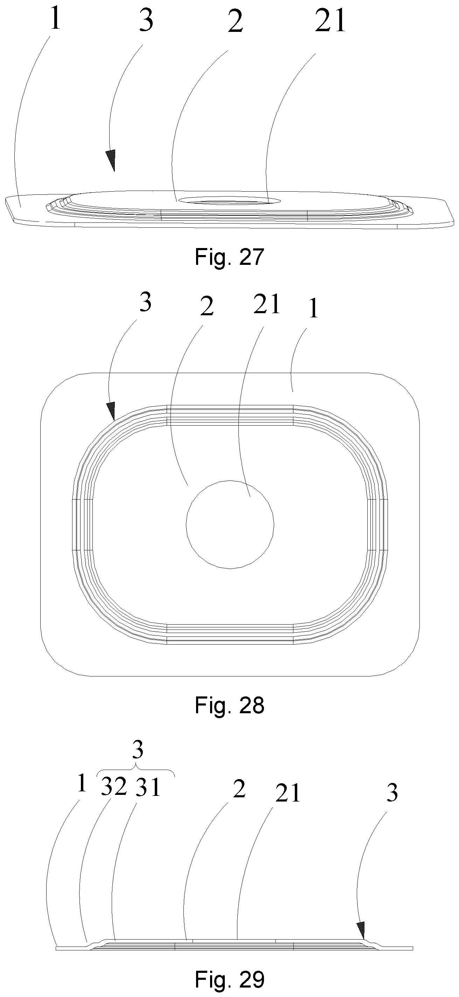

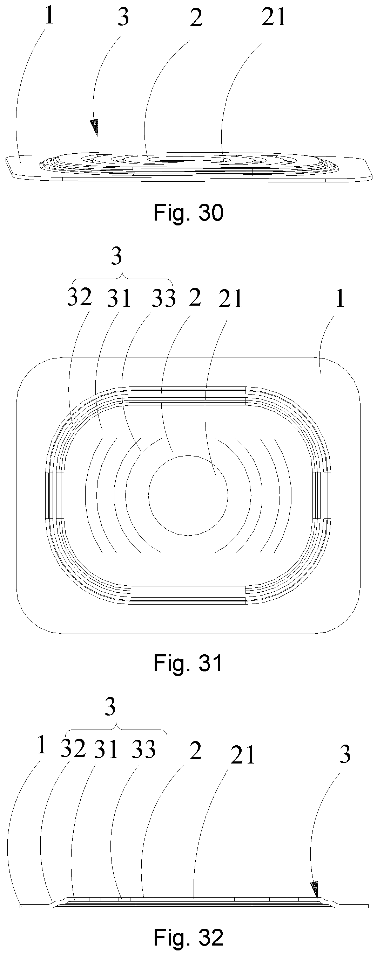

In one embodiment, the cross-section of the supporting part 2 is circular (as shown in Figs. 18-20), square (as shown in Figs. 21-32) or polygonal. And/or, the cross-section of the bearing part 1 is circular, square or polygonal.

The cross-sectional shapes of the supporting part 2 and the bearing part 1 are not limited and can be circular, square or polygonal as long as the shapes of the two parts can match each other.

It should be noted in particular that the top surface of the portion in the flexible deformation part 3 where the hollow out portion 33 is provided may be coplanar with the top surface of the supporting part 2, and the portion in the flexible deformation part 3 where the hollow out portion 33 is not provided is lower than the top surface of the supporting part 2.

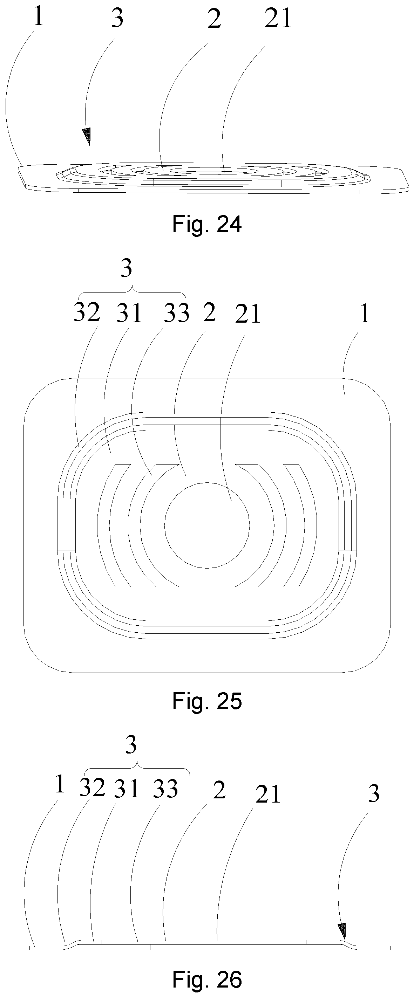

In one embodiment, as shown in Figs. 24 to 32, the plurality of holes may be arranged along the long side direction of the yoke plate 300, or along the short side direction of the yoke plate 300, and the plurality of holes may be respectively arranged on both sides of the driving rod assembly 200. In this case, the plurality of holes may be arc-shaped hole structures, and the central angles of the plurality of holes relative to the driving rod assembly 200 may be the same or different. In the direction away from the driving rod assembly 200, the central angle of the hole relative to the driving rod assembly 200 gradually decreases.

In one embodiment, as shown in Figs. 24 to 32, in the direction from the supporting part 2 to the bearing part 1, the hollow out portion 33 and the corrugated structure 32 are spaced apart.

When the hollow out portion 33 and the corrugated structure 32 are spaced apart from each other in the direction from the supporting part 2 to the bearing part 1, since the radial distances of the corrugated structure 32 and the hollow out portion 33 relative to the driving rod assembly 200 are different, the spread of noise in the corrugated structure 32 and the hollow structure has a sequence, and the noise generated by the driving rod assembly 200 impacting the supporting part 2 first passes through the hollow out portion 33 and then enters the corrugated structure 32, the noise is blocked by the hollow out portion 33, which plays a primary noise reduction role. Then the noise is transmitted to the bearing part 1 through the corrugated structure 32 of the connecting portion 31, which plays a secondary noise reduction role. The two parts successively play a role in reducing noise transmission. Under the joint action of these two parts, the purpose of reducing noise is achieved.

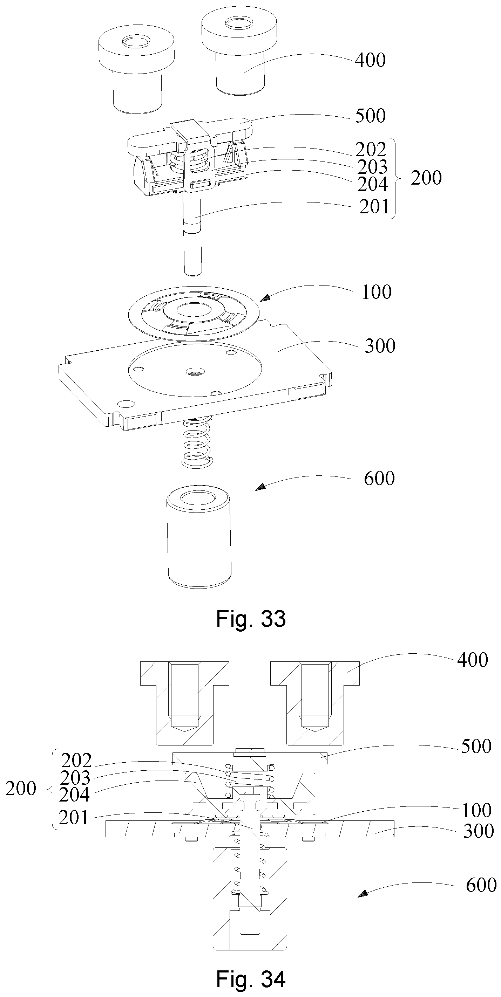

The embodiment of the present disclosure further provides a relay, as shown in Figs. 33- 34, the relay includes a static contact terminal 400, a movable contact piece 500, a driving rod assembly 200 and a yoke plate 300. The driving rod assembly 200 passes through the yoke plate 300 and is configured to drive the movable contact piece 500 to move toward or away from the static contact terminal 400, so that the movable contact piece 500 selectively contacts with and separates from the static contact terminal 400.

The driving rod assembly 200 is passed through the yoke plate 300 and is configured to drive the movable contact piece 500 to move toward or away from the static contact terminal 400, so that the movable contact piece 500 selectively contacts with and separates from the static contact terminal 400. When the movable contact piece 500 contacts with the static contact at the bottom of the static contact terminal 400, the load is connected. If the static contact terminal 400 is a pair, the current flows into one static contact terminal 400 and flows out from the other static contact terminal 400 after passing through the movable contact piece 500.

If the static contact terminal 400 and the movable contact piece 500 need to be separated, the driving rod assembly 200 drives the movable contact piece 500 to move in the first direction away from the static contact terminal 400. There may be a large impact between the driving rod assembly 200 and the yoke plate 300, resulting in a large noise. To solve this problem, the relay further includes a noise reduction gasket 100, which is disposed between the driving rod assembly 200 and the yoke plate 300.

By providing the noise reduction gasket 100 between the driving rod assembly 200 and the yoke plate 300, the noise reduction gasket 100 plays a role of isolating the driving rod assembly 200 and the yoke plate 300. The driving rod assembly 200 does not directly contact the yoke plate 300 but directly contacts the noise reduction gasket 100. The noise reduction gasket 100 plays a role of buffering and noise reduction, thereby achieving the effect of reducing the generation of noise and suppressing the spread of noise.

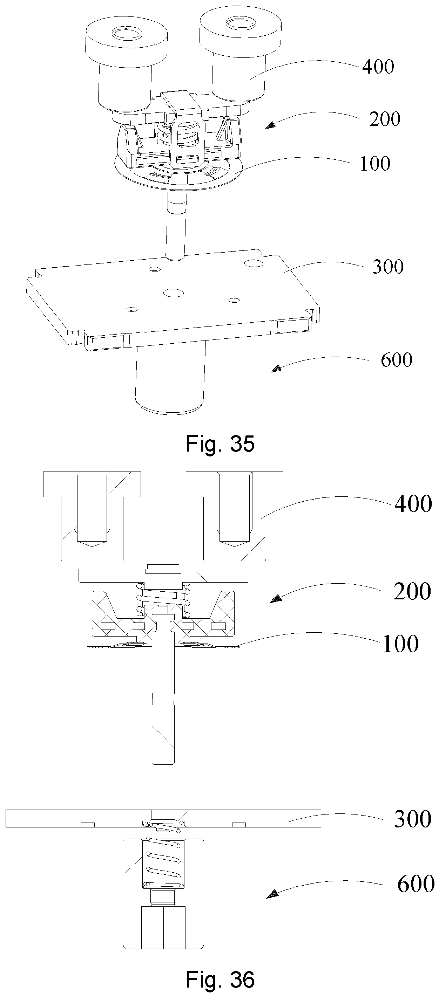

In one embodiment, the bearing part 1 of the noise reduction gasket 100 is fixedly arranged relative to the yoke plate 300 (as shown in Figs. 33-34). Alternatively, the supporting part 2 of the noise reduction gasket 100 is fixedly arranged relative to the driving rod assembly 200 (as shown in Figs. 35-36). Alternatively, the bearing part 1 of the noise reduction gasket 100 the yoke plate 300 are movably arranged, and the supporting part 2 of the noise reduction gasket 100 and the driving rod assembly 200 are movably arranged.

As shown in Figs. 33-34, the bearing part 1 of the noise reduction gasket 100 is fixedly arranged relative to the yoke plate 300, that is, the noise reduction gasket 100 and the yoke plate 300 are rigidly connected or fixedly arranged, so as to ensure the position stability of the noise reduction gasket 100 and avoid the position deviation of the noise reduction gasket 100. The supporting part 2 of the noise reduction gasket 100 is movably arranged relative to the driving rod assembly 200, that is, there is no relative locking between the noise reduction gasket 100 and the driving rod assembly 200, and the driving rod assembly 200 can move relative to the noise reduction gasket 100, so as to avoid the interference with the movement of the driving rod assembly 200.

As shown in Figs. 35-36, the supporting part 2 of the noise reduction gasket 100 is fixedly arranged relative to the driving rod assembly 200, that is, the noise reduction gasket 100 and the driving rod assembly 200 are rigidly connected or fixedly arranged, and the bearing part 1 of the noise reduction gasket 100 is movably arranged relative to the yoke plate 300, that is, there is no relative locking between the noise reduction gasket 100 and the yoke plate 300. The noise reduction gasket 100 moves with the movement of the driving rod assembly 200 to ensure the position stability of the noise reduction gasket 100. The driving rod assembly 200 reduces the impact noise on the yoke plate 300 through the impact of the noise reduction gasket 100 on the yoke plate 300.

By movably disposing between the bearing part 1 of the noise reduction gasket 100 and the yoke plate 300, and movably disposing between the supporting part 2 of the noise reduction gasket 100 and the driving rod assembly 200, that is, there is no relative locking between the noise reduction gasket 100 and the yoke plate 300, and between the noise reduction gasket 100 and the driving rod assembly 200, the driving rod assembly 200 can move relative to the noise reduction gasket 100, thereby avoiding interference with the movement of the driving rod assembly 200, and the noise reduction gasket 100 moves with the movement of the driving rod assembly 200, and the noise reduction gasket 100 plays a follow-up role. The driving rod assembly 200 impacts the noise reduction gasket 100, and the noise reduction gasket 100 buffers and reduces noise, thereby reducing the impact on the yoke plate 300, thereby reducing the impact noise on the yoke plate 300.

It should be noted in particular that if the bearing part 1 of the noise reduction gasket 100 and the yoke plate 300 are fixedly arranged, and the supporting part 2 of the noise reduction gasket 100 and the driving rod assembly 200 are fixedly arranged, then the driving rod assembly 200, the noise reduction gasket 100 and the yoke plate 300 will be fixed together, so that the driving rod assembly 200 is in a locked state and cannot be moved, so this solution needs to be excluded.

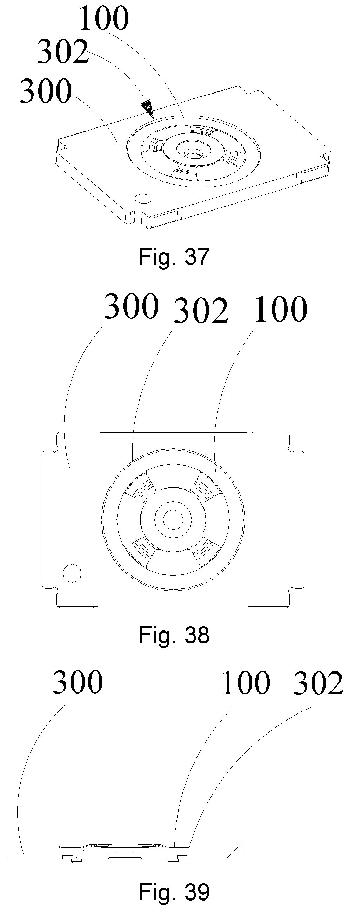

In one embodiment, as shown in Figs. 37 to 39, the yoke plate 300 is provided with an accommodation groove 302, the accommodation groove 302 is used to accommodate at least a portion of the noise reduction gasket 100, the accommodation groove 302 provides an accommodation space for the noise reduction gasket 100, and the side wall of the accommodation groove 302 also serves to limit the position of the noise reduction gasket 100.

It should be noted that the inner wall of the accommodation groove 302 and the noise reduction gasket 100 may be separated, may be in contact, or may be connected by brazing, laser welding, resistance welding, etc.

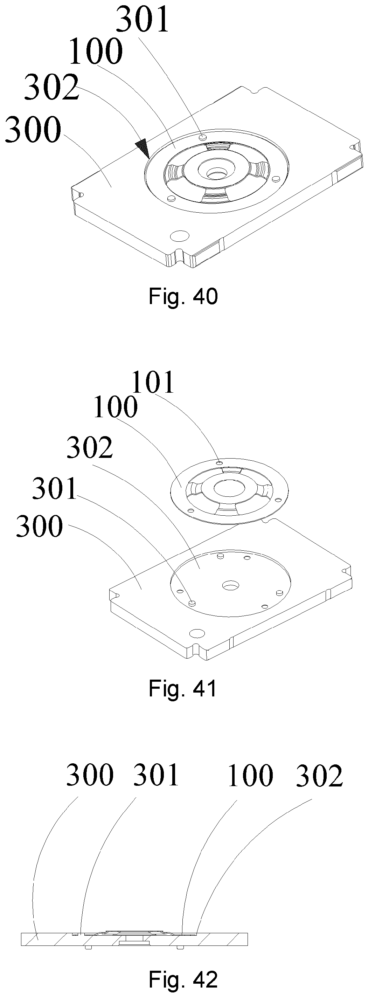

In one embodiment, as shown in Figs. 40 to 42, one of the bearing part 1 of the noise reduction gasket 100 and the yoke plate 300 is provided with a positioning column 301, and the other is provided with a positioning hole 101 corresponding to the positioning column 301, and the positioning column 301 passes through the positioning hole 101.

The positioning column 301 passes through the positioning hole 101, to play the role of initial positioning between the noise reduction gasket 100 and the yoke plate 300, thereby ensuring the accuracy of the relative position between the noise reduction gasket 100 and the yoke plate 300. If a rigid connection is required between the noise reduction gasket 100 and the yoke plate 300, the positioning column 301 can be specifically used as a rivet, and the rivet is inserted through the positioning hole 101 to achieve a fixed connection between the noise reduction gasket 100 and the yoke plate 300. If a rigid connection is not required between the noise reduction gasket 100 and the yoke plate 300, when the noise reduction gasket 100 moves with the driving rod assembly 200, the positioning column 301 plays a guiding role to avoid the noise reduction gasket 100 from large position deviation during the movement.

It should be noted in particular that in some embodiments, the size of the positioning hole 101 is larger than the size of the positioning column 301. If the noise reduction gasket 100 rotates with the driving rod assembly 200, the positioning hole 101 can provide a movable space for the positioning column 301, thereby avoiding the situation where the positioning column 301 is restricted by the positioning hole 101 and stuck.

In one embodiment, the driving rod assembly 200 includes a push rod 201, a first elastic piece 202, a connecting bracket 203 and a mounting seat 204 (as shown in Figs. 33-34 ), the top of the push rod 201 is fixed to the mounting seat 204, and the mounting seat 204 is used to install a spring. The connecting bracket 203 is a U-shaped structure, the opening of the connecting bracket 203 is arranged toward the mounting seat 204, the lower end of the connecting bracket 203 is connected to the mounting seat 204, the inner wall of the upper end of the connecting bracket 203 is connected to the movable contact piece 500, and the connecting bracket 203 plays a role in limiting the movable contact piece 500. The first elastic piece 202 is specifically a spring, and the two ends of the first elastic piece 202 are respectively abutted against the mounting seat 204 and the movable contact piece 500, and the first elastic piece 202 plays an elastic and reset role to prevent the movable contact piece 500 from being moved. There is a rigid collision between 500 and the static contact.

It should be noted in particular that the push rod 201 and the mounting seat 204 are integrally formed structures, which are realized by an integral injection molding process, thereby reducing the number of parts assembly steps and lowering production costs.

It should be noted in particular that the relay further includes an insulating cover (not shown) disposed on the yoke plate 300. The static contact terminal 400 passes through the insulating cover and at least partially extends into the insulating cover. The static contact terminal 400 provides a fixed position, the driving rod assembly 200 is at least partially disposed in the insulating cover, and the insulating cover provides an insulating environment for the static contact terminal 400, the movable contact piece 500 and the driving rod assembly 200.

In one embodiment, the relay further includes an electromagnet unit 600, and the electromagnet unit 600 includes a bobbin, a coil, a static iron core and a movable iron core. The bobbin is hollow and cylindrical and is made of insulating material. The coil surrounds the bobbin. The static iron core is fixedly arranged in the center hole of the bobbin. The static iron core and the movable iron core are arranged opposite to each other. The movable iron core is movably arranged. The movable iron core is connected to the driving rod assembly 200 so as to be attracted by the static iron core when the coil is energized. The movable iron core and the driving rod assembly 200 can be connected by screwing, riveting, welding or other methods. The second elastic piece is also arranged between the movable iron core and the push rod 201. The second elastic piece is mounted on the outside of the push rod 201. The second elastic piece plays a role of elastic restoration.

In actual use, the static contact terminal 400 and the movable contact piece 500 are in a complete closed state before the relay is disconnected, the first elastic piece 202 is compressed over travel to provide contact pressure, and the second elastic piece spring is also compressed to provide contact breaking force. At this time, both elastic pieces are compressed and elastic potential energy is stored. If the relay receives a power-off command, the stored elastic potential energy will be converted into kinetic energy of the entire driving rod assembly 200, thereby realizing the disconnection between the static contact terminal 400 and the movable contact piece 500 in the relay.

It should be understood that the application of the present disclosure is not limit to the detailed structure and arrangement of components provided in this specification. The present disclosure can have other embodiments, and can be implemented and carried out in various ways. The aforementioned variations and modifications fall within the scope of the present disclosure. It should be understood that the disclosure disclosed and defined in this specification may extend to all alternative combinations of two or more individual features that are apparent or mentioned in the text and/or drawings. All of the different combinations form various alternative aspects of the present disclosure. Embodiments described in this specification illustrate the best modes known for carrying out the present disclosure, and will allow those skilled in the art to utilize the present disclosure.

## Claims

1. A noise reduction gasket located between a driving rod assembly (200) and a yoke plate (300), comprising:
a bearing part (1) mounted on the yoke plate (300);
a supporting part (2) connected to the bearing part (1), the driving rod assembly (200) being configured to pass through the supporting part (2) along a first direction and selectively abut against the supporting part (2); and
a flexible deformation part (3) provided between the bearing part (1) and the supporting part (2), and is configured for buffering between the supporting part (2) and the bearing part (1) and for noise reduction,
wherein the noise reduction gasket is at least partially made of a rigid material.

2. The noise reduction gasket according to claim 1, wherein the noise reduction gasket comprises a hollow part (4), the hollow part (4) is disposed between the bearing part (1) and the supporting part (2) along the first direction.

3. The noise reduction gasket according to claim 2, wherein along the first direction, a bottom surface of the supporting part (2) is higher than a bottom surface of the bearing part (1), so that the hollow part ( 4) is formed between the supporting part (2) and the bearing part (1).

4. The noise reduction gasket according to claim 1, wherein along a circumferential direction of the first direction, the supporting part (2), the flexible deformation part (3) and the bearing part (1) are mutually sleeved.

5. The noise reduction gasket according to claim 4, wherein a projection of the supporting part (2) on the yoke plate (300) is arranged within a projection of the bearing part (1) on the yoke plate (300); or,
the projection of the bearing part (1) on the yoke plate (300) is arranged within the projection of the supporting part (2) on the yoke plate (300).

6. The noise reduction gasket according to claim 1, wherein the flexible deformation part (3) comprises a connecting portion (31), the connecting portion (31) is located between the bearing part (1) and the supporting part (2), and the connecting portion (31) is connected to the bearing part (1) and the supporting part (2), respectively.

7. The noise reduction gasket according to claim 6, wherein the connecting portion (31) is at least partially provided with a corrugated structure (32), the corrugated structure (32) is configured to absorb and block noise transmitted from the supporting part (2) to the bearing part (1).

8. The noise reduction gasket according to claim 7, wherein the connecting portion (31) is provided with at least one of a groove and a protrusion to form the corrugated structure (32).

9. The noise reduction gasket according to claim 6, wherein along the first direction, a thickness of the connecting portion (31) is at least partially different.

10. The noise reduction gasket according to claim 9, wherein along the first direction, the thickness of the connecting portion (31) is smaller than a thickness of the supporting part (2), and the thickness of the connecting portion (31) is smaller than a thickness of the bearing part (1).

11. The noise reduction gasket according to claim 6, wherein the flexible deformation part (3) further comprises a hollow out portion (33), the hollow out portion (33) is located between the bearing part (1) and the supporting part (2), and is configured to block the noise transmitted from the supporting part (2) to the bearing part (1).

12. The noise reduction gasket according to claim 11, wherein a plurality of connecting portions (31) spaced with each other are arranged between the bearing part (1) and the supporting part (2), and the hollow out portion (33) is formed between two adjacent connecting portions (31).

13. The noise reduction gasket according to claim 12, wherein a width of the connecting portion (31) along the first direction gradually decreases from the bearing part (1) to the supporting part (2); or,
the width of the connecting portion (31) along the first direction gradually increases from the bearing part (1) to the supporting part (2).

14. The noise reduction gasket according to claim 11, wherein the connecting portion (31) is at least partially provided with a corrugated structure (32), the corrugated structure (32) is configured to absorb and block noise transmitted from the supporting part (2) to the bearing part (1);
wherein the hollow out portion (33) is provided on the connecting portion (31).

15. The noise reduction gasket according to claim 14, wherein the corrugated structure (32) and the hollow out portion (33) are arranged around the supporting part (2) along a circumference of the first direction; or,
along a direction from the supporting part (2) to the bearing part (1), the hollow out portion (33) and the corrugated structure (32) are spaced apart.

16. The noise reduction gasket according to claim 15, wherein the connecting portion (31) is provided with a hole to form the hollow out portion (33).

17. The noise reduction gasket according to claim 1, wherein the noise reduction gasket is provided with a notch (5) along a radial direction of the driving rod assembly (200).

18. The noise reduction gasket according to claim 17, wherein a cross-section of the notch (5) is C-shaped, U-shaped or V-shaped.

19. The noise reduction gasket according to claim 17, wherein any one of the supporting part (2) and the bearing part (1) is provided with a through hole (21), the through hole (21) is configured for the driving rod assembly (200) to pass through,
wherein the notch (5) is communicated with the through hole (21).

20. The noise reduction gasket according to any one of claims 1 to 19, wherein a cross-section of the supporting part (2) is circular, square or polygonal; and/or,
a cross-section of the bearing part (1) is circular, square or polygonal.

21. A relay, comprising a static contact terminal (400), a movable contact piece (500), a driving rod assembly (200), a yoke plate (300) and a noise reduction gasket according to any one of claims 1 to 20, the noise reduction gasket is disposed between the driving rod assembly (200) and the yoke plate (300), the driving rod assembly (200) is disposed through the yoke plate (300) and is configured to drive the movable contact piece (500) to move toward or away from the static contact terminal (400), so that the movable contact piece (500) selectively contacts with or separates from the static contact terminal (400).

22. The relay according to claim 21, wherein the bearing part (1) of the noise reduction gasket is fixedly arranged relative to the yoke plate (300); or,
the supporting part (2) of the noise reduction gasket is fixedly arranged relative to the driving rod assembly (200); or,
the noise reduction gasket is movably arranged between the bearing part (1) and the yoke plate (300), and the noise reduction gasket is movably arranged between the supporting part (2) and the driving rod assembly (200).

23. The relay according to claim 21, wherein one of the bearing part (1) of the noise reduction gasket and the yoke plate (300) is provided with a positioning column (301), another one of the bearing part (1) of the noise reduction gasket and the yoke plate (300) is provided with a positioning hole (101) corresponding to the positioning column (301), and the positioning column (301)passes through the positioning hole (101).

## Amended claims

### Amended claims under Art. 19.1 PCT

1. A noise reduction gasket, comprising:
a bearing part (1);
a supporting part (2) connected to the bearing part (1); and
a flexible deformation part (3) provided between the bearing part (1) and the supporting part (2), and is configured for buffering between the supporting part (2) and the bearing part (1) and for noise reduction,
wherein the flexible deformation part (3) is at least partially made of a rigid material.

2. The noise reduction gasket according to claim 1, wherein the noise reduction gasket comprises a hollow part (4), the hollow part (4) is disposed between the bearing part (1) and the supporting part (2) along a first direction.

3. The noise reduction gasket according to claim 2, wherein along the first direction, a bottom surface of the supporting part (2) is higher than a bottom surface of the bearing part (1), so that the hollow part ( 4) is formed between the supporting part (2) and the bearing part (1).

4. The noise reduction gasket according to claim 2, wherein the hollow part (4) always remains a suspended state after the noise reduction gasket completes hitting and buffering process.

5. The noise reduction gasket according to claim 1, wherein along a circumferential direction of a first direction, the supporting part (2), the flexible deformation part (3) and the bearing part (1) are mutually sleeved.

6. The noise reduction gasket according to claim 1, wherein the flexible deformation part (3) comprises a connecting portion (31), the connecting portion (31) is located between the bearing part (1) and the supporting part (2), and the connecting portion (31) is connected to the bearing part (1) and the supporting part (2), respectively.

7. The noise reduction gasket according to claim 6, wherein the connecting portion (31) is at least partially provided with a corrugated structure (32), the corrugated structure (32) is configured to absorb and block noise transmitted from the supporting part (2) to the bearing part (1).

8. The noise reduction gasket according to claim 7, wherein the connecting portion (31) is provided with at least one of a groove and a protrusion to form the corrugated structure (32).

9. The noise reduction gasket according to claim 6, wherein along a first direction, a thickness of the connecting portion (31) is at least partially different.

10. The noise reduction gasket according to claim 9, wherein along the first direction, the thickness of the connecting portion (31) is smaller than a thickness of the supporting part (2), and the thickness of the connecting portion (31) is smaller than a thickness of the bearing part (1).

11. The noise reduction gasket according to claim 6, wherein the flexible deformation part (3) further comprises a hollow out portion (33), the hollow out portion (33) is located between the bearing part (1) and the supporting part (2), and is configured to block the noise transmitted from the supporting part (2) to the bearing part (1).

12. The noise reduction gasket according to claim 11, wherein a plurality of connecting portions (31) spaced with each other are arranged between the bearing part (1) and the supporting part (2), and the hollow out portion (33) is formed between two adjacent connecting portions (31).

13. The noise reduction gasket according to claim 12, wherein a width of the connecting portion (31) along a first direction gradually decreases from the bearing part (1) to the supporting part (2); or,
the width of the connecting portion (31) along a first direction gradually increases from the bearing part (1) to the supporting part (2).

14. The noise reduction gasket according to claim 11, wherein the connecting portion (31) is at least partially provided with a corrugated structure (32), the corrugated structure (32) is configured to absorb and block noise transmitted from the supporting part (2) to the bearing part (1);
the hollow out portion (33) is provided on the connecting portion (31).

15. The noise reduction gasket according to claim 14, wherein the corrugated structure (32) and the hollow out portion (33) are arranged around the supporting part (2) along a circumference of a first direction; or,
along a direction from the supporting part (2) to the bearing part (1), the hollow out portion (33) and the corrugated structure (32) are spaced apart.

16. The noise reduction gasket according to claim 15, wherein the connecting portion (31) is provided with a hole to form the hollow out portion (33).

17. The noise reduction gasket according to any one of claims 1 to 16, wherein a cross-section of the supporting part (2) is circular, square or polygonal; and/or,
a cross-section of the bearing part (1) is circular, square or polygonal.

18. The noise reduction gasket according to any one of claims 1 to 16, wherein the noise reduction gasket is disposed between a driving rod assembly (200) and a yoke plate (300), the bearing part (1) is provided on the yoke plate (300), the driving rod assembly (200) is configured to pass through the supporting part (2) and selectively abut to the supporting part (2).

19. A relay, comprising a static contact terminal (400), a movable contact piece (500), a driving rod assembly (200), a yoke plate (300) and a noise reduction gasket according to any one of claims 1 to 18, the noise reduction gasket is disposed between the driving rod assembly (200) and the yoke plate (300), the driving rod assembly (200) is disposed through the yoke plate (300) and is configured to drive the movable contact piece (500) to move toward or away from the static contact terminal (400), so that the movable contact piece (500) selectively contacts with or separates from the static contact terminal (400).

20. The relay according to claim 19, wherein the bearing part (1) of the noise reduction gasket is fixedly arranged relative to the yoke plate (300); or,
the supporting part (2) of the noise reduction gasket is fixedly arranged relative to the driving rod assembly (200); or,
the noise reduction gasket is movably arranged between the bearing part (1) and the yoke plate (300), and the noise reduction gasket is movably arranged between the supporting part (2) and the driving rod assembly (200).

21. The relay according to claim 19, wherein one of the bearing part (1) of the noise reduction gasket and the yoke plate (300) is provided with a positioning column (301), another one of the bearing part (1) of the noise reduction gasket and the yoke plate (300) is provided with a positioning hole (101) corresponding to the positioning column (301), and the positioning column (301) passes through the positioning hole (101).

22. The relay according to claim 19, wherein a projection of the supporting part (2) on the yoke plate (300) is arranged within a projection of the bearing part (1) on the yoke plate (300); or,
the projection of the bearing part (1) on the yoke plate (300) is arranged within the projection of the supporting part (2) on the yoke plate (300).

23. The relay according to claim 19, wherein the noise reduction gasket is provided with a notch (5) along a radial direction of the driving rod assembly (200).

24. The relay according to claim 23, wherein a cross-section of the notch (5) is C-shaped, U-shaped or V-shaped.

25. The relay according to claim 23, wherein any one of the supporting part (2) and the bearing part (1) is provided with a through hole (21), the through hole (21) is configured for the driving rod assembly (200) to pass through, wherein the notch (5) is communicated with the through hole (21).
